# EUROPEAN PATENT SPECIFICATION

(11) **EP 1 366 491 B1**
(45) Date of publication and mention of the grant of the patent: **02.02.2005**
(21) Application number: 02703402.4
(22) Date of filing: 28.02.2002
(51) Int. Cl.: G10L 15/26, G06F 17/30

(54) **NATURAL LANGUAGE QUERY SYSTEM FOR ACCESSING AN INFORMATION SYSTEM**
ABFRAGESYSTEM IN NATÜRLICHER SPRACHE FÜR DEN ZUGRIFF AUF EIN INFORMATIONSSYSTEM
SYSTEME D'INTERROGATION EN LANGUE NATURELLE PERMETTANT D'ACCEDER A UN SYSTEME D'INFORMATION

(30) Priority: 28.02.2001 EP 01200749
(43) Date of publication of application: 03.12.2003
(73) Proprietor: Voice-Insight, 1070 Brussels (BE)
(72) Inventor: KEMPER, Charles, Voice-Insight, B-1070 Brussels (BE); LEGER, François, Voice-Insight, B-1070 Brussels (BE); DEN OUDEN, Aart, Voice-Insight, B-1070 Brussels (BE)
(74) Representative: Claeys, Pierre
(86) International application number: PCT/BE2002/000024
(87) International publication number: WO 2002/071393

(56) References cited:
- WO-A-00/65814
- US-A- 4 688 195
- US-A- 5 083 268
- ATTWATER D J ET AL: "ISSUES IN LARGE-VOCABULARY INTERACTIVE SPEECH SYSTEMS" BT TECHNOLOGY JOURNAL, BT LABORATORIES, GB, vol. 14, no. 1, 1996, pages 177-186, XP000554647 ISSN: 1358-3948
- ZOEPPRITZ M: "DATENABFRAGE IN NATURLICHER SPRACHE NATURAL LANGUAGE DATA BASE QUERY" IT + TI INFORMATIONSTECHNIK UND TECHNISCHE INFORMATIK, OLDENBOURG VERLAG. MUNCHEN, DE, vol. 36, no. 2, 1 April 1994 (1994-04-01), pages 14-18, XP000465092 ISSN: 0944-2774
- WEST V: "NATURAL LANGUAGE DATABASE ENQUIRY" ICL TECHNICAL JOURNAL, PETER PERGRINUS LTD. HITCHIN, GB, vol. 5, no. 1, 1 May 1986 (1986-05-01), pages 46-63, XP000001670

## Description

The present invention relates to an interaction system aimed at permitting a user to interact with an information system by means of a recognition system.

Recognition systems usually comprise two modules : a recognition module that converts phrases generated by the user into a textual computer representation of said phrases and a text to generation module that can convert a textual computer representation in a generated phrase understandable by the user. Among recognition systems, one finds namely speech recognition systems with which the user can generate phrases by way of pronunciation and that can generate aloud phrases to the user, and text recognition systems such as text scanning systems, with which the user can generate phrases by way of a written text and that can generate phrases to the user in a written form.

Information systems manage data that are usually stored in databases. These data bases are commonly customised by their users, as well as the information systems aimed at exploiting said data bases. An example of a known information system is disclosed in the patent document WO-A-0065814.

In databases, the data, also called objects, are gathered into object types identified by a code. Each object type gathers object instances, that is specific data or objects, of the considered type. With each object type are associated a certain number of attributes that characterise the instances of the object type. Similar to objects, attributes may be gathered in attribute types. An attribute type groups attributes that have similar characteristics e.g. textual or date attributes.

Each information system is adapted to the databases it has to manipulate and thus may address the object types, attribute types, and instances of objects of an object type having certain attribute instances. Therefore, the codes used by a database to identify object types and attribute types are recognized by the information system that has to manipulate said database.

In addition, each information system contains action types gathering actions that may be applied on the objects of a database by the system. Each action type fits to one ore more object types.

Information systems are gathered in different domains of applications such as Geographical Information Systems (GIS), Enterprise Resource Planning (ERP) systems, Document Management (DM) systems or Product Data Management (PDM) systems to name a few well known business application domains.

Traditionally, the users of a specific information system have to interact with this system by means of an interface specially developed for the system, that will be different from one system to another even in the same domain of applications. In addition, said user will have to interact with an information system by using the keyboard and/or the mouse of the computer that accesses the information system.

The present invention overcomes these problems in providing an interaction system, called Voice Query Language, that enables interactions of a user with different pre-existing information systems of a domain of applications by using different pre-existing recognition systems. This invention thus enables the user to apply, by generation of phrases, called queries, actions defined by the information system to objects stored in the databases manipulated by the information system and identified by attributes.

The inventor has discovered that for all the information systems of a domain of applications, common object classes, attribute classes and action classes can be defined. These classes respectively gather objects, attributes and actions that present a common characteristic defining the considered class, said characteristic being specific for all the information systems of the domain. A same instance of an object may be part of several object classes if it presents simultaneously the characteristics of these different classes. Based on said object, attribute and action classes, action phrase set-ups can be defined, that will constitute models that can be particularised with the specific object types, attribute types and action types of a specific information system of the considered domain of applications and the instances of the objects with its attributes instances stored in the databases handled by said information system. The referred action phrase set-ups that are used to build actual phrases thus define a grammar consisting essentially of object types, attribute types, action types and production rules are provided to be used in the interactions of the user with an information system of the domain considered, both when the system presents to the user the different queries he may request and when the user addresses such a query to the information system.

Therefore, the invention provides an interaction system for enabling a user of an information system belonging to an application domain of similar information systems to interact with said information system, said interaction system being aimed at being connected to the information system, the interaction system further being aimed at being connected to a recognition system for enabling the user to interact with the information system by means of phrases generated by said user and processed by the recognition system, said interaction system comprising at least one domain module aimed at having defined therein phrases set-ups that are constructed based on object classes, attribute classes and action classes that are common to said information system of the considered application domain and are provided to be particularised with specific object types, action types, attribute types and their instances, provided from the information system, in order to define a grammar of phrases that are provided to be generated by the user to interact with the information system.

Preferably, the interaction system according to the invention comprises a generic module connected to the at least one domain module and aimed at being connected to the recognition system, said generic module being aimed at converting said phrases that can be generated by the user into a textual computer representation usable by the recognition system for the recognition of said phrases when generated by the user and being aimed at converting a textual computer representation produced by the recognition system, after recognition of a phrase generated by the user has happened, into a phrase defined by said grammar.

It is more preferred that said generic module comprises an element containing information enabling configuration of the recognition system.

In another preferred configuration of the interaction system according to the invention, it comprises an adapter module connected to the at least one domain module and aimed at being connected to the information system, said adapter module being aimed at extracting objects, attributes, action types and their instances from the information system and pass them to the at least one domain module and being aimed at driving the information system for the latter to execute a demand for action contained in a phrase generated by the user.

Preferably, the at least one domain module comprises an element containing information about general notions of objects and attributes identifying objects that is common to several application domains.

One also prefers that the at least one domain module is aimed at being connected to a system analyst and linguist aimed at defining object classes, attribute classes, action classes and phrases set-ups that said at least one domain module is aimed at having defined therein.

More preferably, the aforementioned recognition system is a speech recognition system and the phrases generated by the user are generated by pronunciation by said user.

This enables the user to interact with an information system by means of the natural language of said user.

Alternatively, said recognition system is a text recognition system and the phrases generated by the user are written by said user

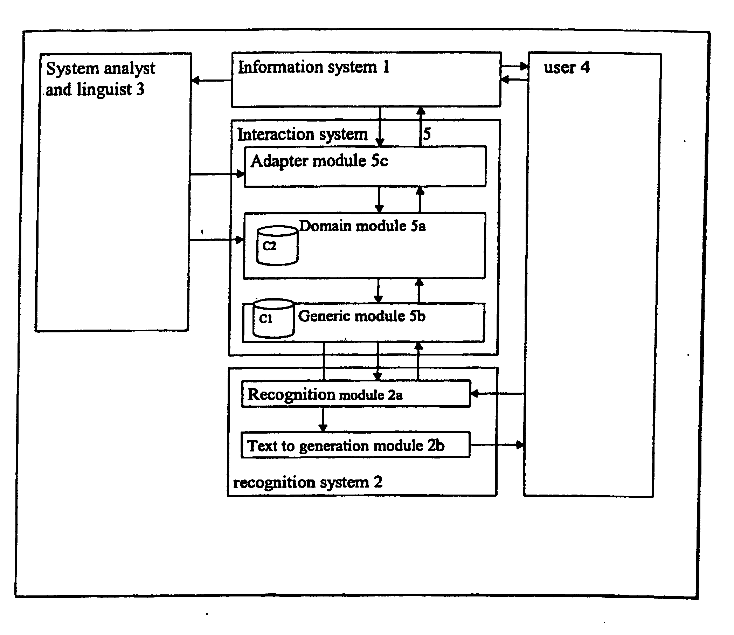

The invention will now be described in more details in reference to figure 1 that represents an interaction system according to the invention integrated in its environment.

Referring to figure 1, the environment comprising the interaction system according to the invention is composed of the following elements :
1 : An information system aimed at manipulating several object types being characterised by several attributes being part of attribute types, the manipulation being performed by means of several action types. Objects and attribute types have instances that can be found in the databases manipulated by the information system.
2 : A recognition system comprising two modules :
   2a : The recognition module that converts phrases generated by the user into a textual computer representation.
   2b : The text to generation module that can convert a textual computer representation into a generated phrase understandable by the user.
3 : A system analyst and linguist that provides the object, attributes and action classes as well as the phrases set-ups that will be used to exercise the information system actions on the object types. System analysts and linguists are human beings that are capable of analysing how the user would vocally interrogate the system. The result of that analysis will be a collection of action phrase set-ups being typical of a domain of applications.
4 : A user that will use the system by means of the grammar defined by the phrase set-ups particularised with the instances of objects, attributes and actions manipulated by the information system.
5 : The interaction system according to the invention, enabling the user to interact with the information system in generating phrases that said system must process, based on the aforementioned particularised phrase set-ups. This system consists in three modules :
   5b : A generic module that can convert a language grammar, that is a set of object types, action types and production rules of valid phrases that can be generated by the user in view of interacting with an information system, into a computer representation that can be used by the recognition system and convert a computer representation resulting from a recognition into a phrase defined by a grammar. Said generic module comprises an element c1 containing information enabling configuration of the recognition system, namely :
      - The recognition software used,
      - The language used,
      - The communication devices used such as for example microphones, or telephone devices.
   5a : A domain module that is able to receive elements as object types, attribute types and action types as well as instances of the latter that are manipulated by information systems of a predetermined domain of applications. The domain module comprises definitions of classes of objects, actions and attributes that are typical of said domain and that are used to combine the aforementioned elements received with the aforementioned action phrase set-ups to produce the grammar needed by the generic module 5b. The action phrases set-ups are received from the system analyst and linguist in order that queries can be generated by the user in a natural language. If multiple Information Systems are available simultaneously, multiple grammars can be generated and activated. The interaction system according to the invention will switch between the information systems. A similar switch could be made between The an interaction system according to the invention for a domain such as GIS and The an interaction system according to the invention for another domain such as DM. The domain module also can take a phrase produced by the generic module after recognition happened and generate an action description on specified objects identified by specific attribute values to be executed by the information system 1. The aforementioned definitions are comprised within an element c2 of the domain module, that contains :
      - Information common to several domains such as general notions of objects and attributes identifying objects.
      - The domain identification comprising configuration elements identifying a domain of information systems, as for example GIS information systems.
      - The object classes belonging to this domain. Each class represent a set of objects with a common characteristic. For example, in GIS applications, objects classes such as surface class (countries, counties), linear class (rivers, streets), punctual class (cities), graphical class (aerial photography geographically referenced, maps). A real object may be part of several object classes. For example, in the GIS domain, a typical object such as a city street will belong to the displayable object class, selectable object class, spatial object class and linear object class.
      - The actions classes that can be applied to the objects classes. Indeed, associated with each object class, one can define, for a given domain, a class of action that can be applied to that object class. For example, in the GIS domain, an object belonging to the displayable object class can be displayed or hidden, an object belonging to the spatial object class can be projected on a map or be intersected with another object belonging to the same class, an object belonging to the selectable object class can be selected or deselected, an object belonging to the linear object class can be moved along for a certain distance to provide a specific location. Whatever may be the specific object types and instances, it is always possible to manipulate (show, select, highlight,...) punctual, linear and surface objects contained by another surface object, manipulate surface objects crossed by linear objects or manipulate punctual objects along a given linear object.
      - The attribute classes that can be attached to the objects. An attribute class gather attributes with a common meaning toward the objects of all the object classes. Namely, attributes belonging to the 'instance naming' class are used to identify a particular instance of an object type. For example, if in the GIS domain, roads have an attribute which is "road number" whose instances are numbers. "road number" is therefore of the 'numerical' attribute type but also part of the attribute class 'instance naming' because roads can be referred to in speech by their number.
      - The various phrase set-ups that can be used to request the execution of the actions. Associated with each action class, one can define a set of phrase set-ups that can be used to request the class action to be done. For example, in the GIS domain, phrase set-ups such as display 'xyz' or go to 'abc' can be defined. As 'xyz' or 'abc', the attribute class used to identify the object types on which the action will be performed can be referenced. These set-ups will be particularised by instances of objects belonging to these types manipulated by the information system with which the user will interact. Furthermore, the actions like 'display' or 'go to' can have synonyms that could easily be exchanged with the original terms. This means that multiple variants of a same phrase set-up can exist without substantial changes in its grammatical structure.
      - The term elements that assembled in sequences compose phrases to be generated by the user. One finds static term elements whose instances do not need to be extracted from the information system such as numbers, comparison operators, and dynamic elements whose instances do need to be extracted from the information system such as those of object types or attributes types. Statically defined term elements are straightforward list of terms, which elements can be predetermined during the domain module configuration.

      Each of these elements can be flagged as optional; this means they can be forgotten from the generation without impairing the meaning of the phrase, such as politeness expressions.
      Each of these elements can also be flagged as repetitive, as for composing numerical values, spelling identification codes or specifying geographical positions.
      For example, in the GIS domain, one may have the following sequence of static term elements : [-1] [ 2] [+3] [-4] where [-1] mark an optional term list composed of the terms 'please' and 'can you', [ 2] marks an obligatory term list composed of 'pan to the' or 'move to the', [+3] marks a repetitive term list composed of the terms 'north', 'east', 'west', south', [-4] mark an optional term list composed of the terms 'please'. Consequently, the following are valid phrases based on these elements : pan to the north east, can you move to the south south east please.
      Phrases such as [1] [2] [3] and [1] [4] [3] [5] [2] can also be built, in which [1] is either 'show' or 'display', [2] is a related object instance name, [3] is a spatial object type name, [4] is 'the', [5] is 'of. [2] and [3] are dynamic term elements. Then, if the dynamic elements extracted from the information system are two spatial objects called city and state and two instance names called New-York and Washington for the city and New-York and Idaho for the state, then the combination generation will generate the following phrases:
      [1] [2a] [3a]
      [1] [2b] [3b]
      [1] [4] [3a] [5] [2a]
      [1] [4] [3b] [5] [3b]
      in which
      [2a] will be either New-York or Washington
      [3a] will be city
      [2b] will be either New-York or Idaho
      [3b] will be state
      resulting in particular phrases like "show New-York city" or "display the state of Idaho".
   5c : An information system adapter module that is created for a specific information system application. This adapter module is aimed at extracting the objects, attributes and action types as well as their instances from the considered information system and to pass them to the domain module 5a where they are referenced in objects, attributes and action classes defining the domain of the information system. On the other hand, said adapter module is able to drive the information system in order for it to execute the demand for action contained in a phrase generated by the user. This requires the adapter module to translate the action description provided by the domain module 5a into the application logic of the information system.

The transmission of information between the different elements of the environment defined here above occurs as follows :
- From 5b to 2a : a list of words and a definition of the production rules governing the combination of these words into acceptable phrases in a computer representation fit for the recognition system.
- From 2a to 5b : a recognized phrase in a computer representation fit for the recognition system. This phrase corresponds to a valid sequence of words.
- From 5b to 2b : a textual computer representation to be read aloud to the user.
- From 5a to 5b : a set of term lists and a set of combination rules making use of the term lists to build phrase set-ups that represent the valid phrases that can be generated by the user.
- From 5b to 5a : a phrase generated by the user decomposed into a combination rule identification with the identification of the associated term lists and term list items generated by the user.
- From 5c to 5a : a list of object types with their corresponding classes, object instances, attribute types with their corresponding classes and attributes instances.
- From 5a to 5c : an action with related parameters to be executed by the information system. These parameters may include object and attribute instances. In ambiguous cases where two different actions or two different objects could be accessed by the same user command, the different possibilities will be returned to the information system by the domain module, in the hope that the adapter module will be able to remove the ambiguity using the information system contextual information or by asking feedback from the user.
- From 1 to 5c : idem as from 5c to 5a but in the logic language of 1, thus depending on 1
- From 5c to 1 : idem as from 5a to 5c but translated in the logic language of 1, thus depending on 1.

The use of the interaction system according to the invention implies the following sequence of events :
- A domain is identified that regroups the common object, attributes and action classes of a class of information systems.
- The system analyst and linguist 3 defines the objects, attributes and action classes and related action phrases set-ups required by the domain.
- The information is encoded into an internal format that is usable by the domain module 5a
- An adapter module 5c is defined for a specific information system 1 that belongs to the domain identified.
- The user 4 starts the information system.
- The information system starts the adapter module.
- The adapter module uses the information system to extract the objects that can be used by the user and passes this information to the domain module.
- The domain module uses the object classes, attribute classes and action phrases set-ups aforementioned to build the term lists and combination rules for the generic module 5b.
- The generic module converts the term lists and combination rules into a form acceptable to the recognition system and starts the latter.
- The user generates a phrase.
- The recognition system 2, after a plausible phrase was recognized, returns the recognized phrase to the generic module.
- The generic module parses back the phrases into a combination rule and term lists and passes it back to the domain module.
- The domain module reports the needed information to perform the action to the adapter module.
- The adapter module then calls the information system to perform the action.

Example of classification of information treated by a The an interaction system according to the invention enabling a user to interact with a GIS domain information system :

We have an information system capable to display or select spatial objects either by property values or by spatial relationships.

Associated with this system, we have object types being countries and cities; the instances of the objects of these object types have two associated attributes being name and population. Name is of the textual attribute type, population of the numerical attribute type.

For the countries, we have two instances: the U.S.A. and the France.

Their respective populations are 250000000 and 60000000 inhabitants.

For the cities we have six instances: New York, Los Angeles, Dallas, Paris, Lyon, Marseille.

Their respective populations are 1200000, 10000000, 500000, 6000000, 1000000, 800000 inhabitants.

In the English language, one can define the following phrases to access the objects by the system :
Generic display/hiding operations:
   Display the countries
   Hide the countries
   Display the cities
   Hide the cities
Global selection operation:
   Select all the countries
   Select all the cities
Naming attribute selection operation
   Select the country named France
   Select the city named Los Angeles
Attribute condition expressions:
   Having U.S.A. as name
   With a population exceeding 1000000
Attribute related selection
   Select the country which name is U.S.A
   Select the city with a population of 12000000 inhabitants.
Spatial condition expressions:
   Within the U.S.A.
Spatial related selection:
   Select the cities within the U.S.A
   Select the country wherein lies Paris

Thus we will define the following configuration items for the c2 element of the domain module of the system :
Domain definition
   Domain X
Object classes
   Displayable objects
   Selectable objects
   Spatially enclosing objects
   Spatially enclosed objects
   Numerically discriminated objects
   Instance named objects.
Action classes (examples)
   For displayable objects:
      Display (presentation of the objects to the user)
      Hide (masking of the objects from the user)
   For selectable objects:
      Select All (selection of the objects)
      Deselect (de-selection of the objects)
Attribute classes
   Object instance naming attribute
   Queryable attribute
Attribute types
   Numeric value attribute
   Textual value attribute
Action phrases set-ups
   List all ('List all countries', 'List all cities')
   Select all ('Select all countries')
   Condition ('With a population exceeding 5 million')
Sequences of term elements (example)
   Condition command = [1] [2] [3] [4] [5]
Dynamic Term elements
   [3] : queryable numeric attributes such as "population". Static Term elements
   [1] = With | having
   [2] = a
   [4] = less than | greather than | equal to
   [5] = number values

## Claims

1. An interaction system (5) for enabling a user (4) of an information system (1) belonging to an application domain of similar information systems to interact with said information system (1) , said interaction system (5) being aimed at being connected to the information system (1), and to a recognition system (2) for enabling said user (4) to interact with said information system (1) by means of phrases generated by said user (4) and processed by said recognition system (2), **characterised in that** said interaction system (5) comprises at least one domain module (5a) aimed at having defined therein phrases set-ups that are constructed based on objects classes, attribute classes and action classes that are common to said information system of the considered application domain and are provided to be particularised with specific object types, action types, attribute types and their instances, provided from said information system (1), in order to define a grammar of phrases that are provided to be generated by said user (4) to interact with said information system (1).

2. An interaction system (5) according to claim 1, **characterised in that** it comprises a generic module (5b) connected to said at least one domain module (5a) and aimed at being connected to said recognition system (2), said generic module (5b) being aimed at converting said phrases that can be generated by said user (4) into a textual computer representation usable by said recognition system (2) for the recognition of said phrases when generated by said user (4) and being aimed at converting a textual computer representation produced by said recognition system (2) after recognition of a phrase generated by said user (4) has happened into a phrase defined by said grammar.

3. An interaction system (5) according to claim 2, **characterised in that** said generic module (5b) comprises an element (c1) containing information enabling configuration of said recognition system (2).

4. An interaction system (5) according to one of the preceding claims, **characterised in that** it comprises an adapter module (5c) connected to said at least one domain module (5a) and aimed at being connected to said information system (1), said adapter module (5c) being aimed at extracting objects, attributes, action types and their instances from said information system (1) and pass them to said at least one domain module (5a) and being aimed at driving said information system (1) for the latter to execute a demand for action contained in a phrase generated by said user (4).

5. An interaction system (5) according to one of the preceding claims, **characterised in that** said at least one domain module (5a) comprises an element (c2) containing information about general notions of objects and attributes identifying objects that is common to several application domains.

6. An interaction system (5) according to any preceding claim, **characterised in that** said at least one domain module (5a) is aimed at being connected to a system analyst and linguist (3) aimed at defining object classes, attribute classes, action classes and phrases set-ups that said at least one domain module (5a) is aimed at having defined therein.

7. An interaction system (5) according to any preceding claim, **characterised in that** said recognition system (2) is a speech recognition system and **in that** the phrases generated by said user (4) are generated by pronunciation by said user (4).

8. An interaction system (5) according to one of the claims 1 to 6, **characterised in that** said recognition system (2) is a text recognition system and **in that** the phrases generated by said user (4) are written by said user (4).

## Patentansprüche

1. Interaktionssystem (5), das es einem Benutzer (4) eines Informationssystems (1), das zu einer Applikationsdomäne von gleichartigen Informationssystemen gehört, ermöglicht, mit diesem Informationssystem (1) zu interagieren, wobei dieses Interaktionssystem (5) darauf ausgerichtet ist, mit dem Informationssystem (1) verbunden zu werden, und mit einem Erkennungssystem (2), um es diesem Benutzer (4) zu ermöglichen, mit diesem Informationssystem (1) mittels durch diesen Benutzer (4) erzeugter und durch dieses Erkennungssystem (2) verarbeiteter Ausdrücke zu interagieren, **dadurch gekennzeichnet, dass** dieses Interaktionssystem (5) mindestens ein Domänenmodul (5a) umfasst, das darauf ausgerichtet ist, darin definierte Anordnungen von Ausdrücken zu haben, die basierend auf Objektklassen, Attributklassen und Aktionsklassen aufgebaut sind, die von diesem Informationssystem der betrachteten Applikationsdomäne geteilt werden und bereitgestellt werden, um mit spezifischen Objekttypen, Aktionstypen, Attributtypen und ihren Instanzen, die von diesem Informationssystem (1) bereitgestellt werden, spezifiziert zu werden, um eine Grammatik zu definieren von Ausdrücken, die bereitgestellt werden, um durch diesen Benutzer (4) erzeugt zu werden, um mit diesem Informationssystem (1) zu interagieren.

2. Interaktionssystem (5) nach Anspruch 1, **dadurch gekennzeichnet, dass** es ein generisches Modul (5b) umfasst, das mit diesem mindestens einen Domänenmodul (5a) verbunden ist und darauf ausgerichtet ist, mit diesem Erkennungssystem (2) verbunden zu werden, wobei dieses generische Modul (5b) darauf ausgerichtet ist, diese Ausdrücke, die durch diesen Benutzer (4) erzeugt werden können, in eine Textdarstellung eines Computers zu konvertieren, die verwendet werden kann durch dieses Erkennungssystem (2) zum Erkennen dieser Ausdrücke, wenn sie durch diesen Benutzer (4) erzeugt werden, und darauf ausgerichtet ist, eine Textdarstellung eines Computers, die durch dieses Erkennungssystem (2) erzeugt wurde, zu konvertieren, nachdem ein Erkennen eines durch diesen Benutzer (4) erzeugten Ausdrucks als ein von dieser Grammatik definierter Ausdruck stattgefunden hat.

3. Interaktionsystem (5) nach Anspruch 2, **dadurch gekennzeichnet, dass** dieses generische Modul (5b) ein Element (c1) umfasst, das Informationen enthält, die die Konfigurierung dieses Erkennungssystems (2) ermöglichen.

4. Interaktionssystem (5) nach einem der vorhergehenden Ansprüche, **dadurch gekennzeichnet, dass** es ein Adaptermodul (5c) umfasst, das mit diesem mindestens einen Domänenmodul (5a) verbunden ist und darauf ausgerichtet ist, mit diesem Informationssystem (1) verbunden zu werden, wobei dieses Adaptermodul (5c) darauf ausgerichtet ist, Objekte, Attribute, Aktionstypen und ihre Instanzen aus diesem Informationssystem (1) zu extrahieren und sie an dieses mindestens eine Domänenmodul (5a) zu übertragen und darauf ausgerichtet ist, dieses Informationssystem (1) für letzteres zu steuern, um eine im durch diesen Benutzer (4) erzeugten Ausdruck enthaltene Aktionsanforderung auszuführen.

5. Interaktionssystem (5) nach einem der vorhergehenden Ansprüche, **dadurch gekennzeichnet, dass** dieses zumindest eine Domänenmodul (5a) ein Element (c2) umfasst, das Informationen über allgemeine Begriffe von Objekte und Attribute identifizierenden Objekten enthält, die von mehreren Applikationsdomänen geteilt werden.

6. Interaktionssystem (5) nach einem der vorhergehenden Ansprüche, **dadurch gekennzeichnet, dass** dieses mindestens eine Domänenmodul (5a) darauf ausgerichtet ist, mit einem Systemanalyst und Linguist (3) verbunden zu werden, der darauf ausgerichtet ist, Objektklassen, Attributklassen, Aktionsklassen und Anordnungen von Ausdrücken zu definieren, die dieses mindestens eine Domänenmodul (5a) darauf ausgerichtet ist, darin definiert zu haben.

7. Interaktionssystem (5) nach einem der vorhergehenden Ansprüche, **dadurch gekennzeichnet, dass** dieses Erkennungssystem (2) ein Spracherkennungssystem ist und dass die durch diesen Benutzer (4) erzeugten Ausdrücke durch Aussprache durch diesen Benutzer (4) erzeugt werden.

8. Interaktionssystem (5) nach einem der Ansprüche 1 bis 6, **dadurch gekennzeichnet**, das dieses Erkennungssystem (2) ein Texterkennungssystem ist und dass die durch diesen Benutzer (4) erzeugten Ausdrücke durch diesen Benutzer (4) geschrieben werden.

## Revendications

1. Système d'interaction (5) pour permettre à un utilisateur (4) d'un système d'information (1) appartenant à un domaine d'application de systèmes d'information similaires d'interagir avec ledit système d'information (1), ledit système d'interaction (5) étant prévu pour être connecté au système d'information (1) et à un système de reconnaissance (2) pour permettre audit utilisateur (4) d'interagir avec ledit système d'information (1) au moyen de phrases générées par ledit utilisateur (4) et traitées par ledit système de reconnaissance (2), **caractérisé en ce que** ledit système d'interaction (5) comprend au moins un module de domaine (5a) prévu pour présenter des organisations de phrases définies dans celui-ci qui sont construites sur la base de classes d'objets, de classes d'attributs et de classes d'actions qui sont communes audit système d'information du domaine d'application considéré et qui sont prévues pour être particularisées avec des types d'objets, des types d'actions et des types d'attributs spécifiques et leurs exemples, provenant dudit système d'information (1), pour définir une grammaire de phrases qui sont prévues pour être générées par ledit utilisateur (4) pour interagir avec ledit système d'information (1).

2. Système d'interaction (5) suivant la revendication 1, **caractérisé en ce qu'**il comprend un module générique (5b) relié audit au moins un module de domaine (5a) et prévu pour être connecté audit système de reconnaissance (2), ledit module générique (5b) étant prévu pour convertir lesdites phrases qui peuvent être générées par ledit utilisateur (4) dans une représentation textuelle d'ordinateur utilisable par ledit système de reconnaissance (2) pour la reconnaissance desdites phrases lorsqu'elles sont générées par ledit utilisateur (4) et étant prévu pour la conversion d'une représentation textuelle d'ordinateur produite par ledit système de reconnaissance (2) après que la reconnaissance d'une phrase générée par ledit utilisateur (4) soit survenue dans une phrase définie par ladite grammaire.

3. Système d'interaction (5) suivant la revendication 2, **caractérisé en ce que** ledit module générique (5b) comprend un élément (c1) contenant une information permettant la configuration dudit système de reconnaissance (2).

4. Système d'interaction (5) suivant l'une des revendications précédentes, **caractérisé en ce qu'**il comprend un module adaptateur (5c) relié audit au moins un module de domaine (5a) et prévu pour être relié audit système d'information (1), ledit module adaptateur (5c) étant prévu pour l'extraction des types d'objets, d'attributs et d'actions et leurs exemples dudit système d'information (1) et pour les passer audit au moins un module de domaine (5a) et étant prévu pour le guidage dudit système d'information (1) pour que ce dernier exécute une demande pour une action contenue dans une phrase générée par ledit utilisateur (4).

5. Système d'interaction (5) suivant l'une des revendications précédentes, **caractérisé en ce que** ledit au moins un module de domaine (5a) comprend un élément (c2) contenant une information concernant des notions générales d'objets et d'attributs identifiant les objets qui sont communs à plusieurs domaines d'application.

6. Système d'interaction (5) suivant l'une des revendications précédentes, **caractérisé en ce que** ledit au moins un module de domaine (5a) est prévu pour être connecté à un système analyste et linguiste (3) prévu pour la définition des classes d'objets, des classes d'attributs, des classes d'actions et de l'organisation des phrases que ledit au moins un module de domaine (5a) est censé avoir définie dans celui-ci.

7. Système d'interaction (5) suivant l'une des revendications précédentes, **caractérisé en ce que** ledit système de reconnaissance (2) est un système de reconnaissance de discours et **en ce que** les phrases générées par ledit utilisateur (4) sont générées par prononciation par ledit utilisateur (4).

8. Système d'interaction (5) suivant l'une des revendications 1 à 6, **caractérisé en ce que** ledit système de reconnaissance (2) est un système de reconnaissance de texte et **en ce que** les phrases générées par ledit utilisateur sont écrites par ledit utilisateur (4).
